# EUROPEAN PATENT APPLICATION

(11) **EP 1 437 781 A2**
(43) Date of publication of application: **14.07.2004**
(21) Application number: 03256776.0
(22) Date of filing: 28.10.2003
(51) Int. Cl.: H01M 8/02

(54) **Fuel cell assembly and reactant distribution structure and method of making the same**

(30) Priority: 31.10.2002 US 286259
(71) Applicant: Hewlett-Packard Development Company, L.P., Houston, TX 77070 (US)
(72) Inventor: Lazaroff, Dennis, Corvallis, OR 97330 (US); Champion, David, Lebanon, OR 97355 (US); Herman, Gregory S., Albany, OR 97321 (US); Mardilovich, Peter, Corvallis, OR 97330 (US)
(74) Representative: Jackson, Richard Eric

(57) **Abstract**

A fuel cell assembly (100) and reactant distribution structure (104) and method of making the same.

## Description

### BACKGROUND OF THE INVENTIONS

### Field of the Inventions

The present inventions are related to fuel cells and fuel cell reactant distribution structures.

### Description of the Related Art

Fuel cells, which convert reactants (i.e. fuel and oxidant) into electricity and reaction products, are advantageous because they are not hampered by lengthy recharging cycles, as are rechargeable batteries, and are relatively small, lightweight and produce virtually no environmental emissions. Nevertheless, the inventors herein have determined that conventional fuel cells are susceptible to improvement. For example, the inventors herein have determined that it would be desirable to provide improved apparatus for distributing reactants to the fuel cell electrodes.

### BRIEF DESCRIPTION OF THE DRAWINGS

Detailed description of preferred embodiments of the inventions will be made with reference to the accompanying drawings.
Figure 1 is a side view of a fuel cell assembly in accordance with a preferred embodiment of a present invention.
Figure 2 is a plan view of a fuel cell in accordance with a preferred embodiment of a present invention.
Figure 3A is a section view taken along line 3A-3A in Figure 2.
Figure 3B is a section view taken along line 3B-3B in Figure 2.
Figure 4 is a plan view of a fuel cell assembly in accordance with a preferred embodiment of a present invention.
Figure 5A is a section view taken along line 5A-5A in Figure 4.
Figure 5B is a section view taken along line 5B-5B in Figure 4.
Figure 5C is a section view taken along line 5C-5C in Figure 4.
Figure 5D is a section view taken along line 5D-5D in Figure 4.
Figures 6A-6D are section views illustrating a step in a reactant distribution structure manufacturing process in accordance with a preferred embodiment of a present invention.
Figures 7A-7D are section views illustrating a step in a reactant distribution structure manufacturing process in accordance with a preferred embodiment of a present invention.
Figures 8A-8D are section views illustrating a step in a reactant distribution structure manufacturing process in accordance with a preferred embodiment of a present invention.
Figures 9A-9D are section views illustrating a step in a reactant distribution structure manufacturing process in accordance with a preferred embodiment of a present invention.
Figures 10A-10D are section views illustrating a step in a reactant distribution structure manufacturing process in accordance with a preferred embodiment of a present invention.
Figure 11 is a diagrammatic view of a fuel cell system in accordance with a preferred embodiment of a present invention.

### DETAILED DESCRIPTION OF THE PREFERRED EMBODIMENTS

The following is a detailed description of the best presently known modes of carrying out the inventions. This description is not to be taken in a limiting sense, but is made merely for the purpose of illustrating the general principles of the inventions. It is noted that detailed discussions of fuel cell structures that are not pertinent to the present inventions have been omitted for the sake of simplicity. The present inventions are also applicable to a wide range of fuel cell technologies and fuel cell systems, including those presently being developed or yet to be developed. For example, although various exemplary fuel cell system are described below with reference to solid oxide fuel cells ("SOFCs"), other types of fuel cells, such as proton exchange membrane ("PEM") fuel cells, are equally applicable to the present inventions.

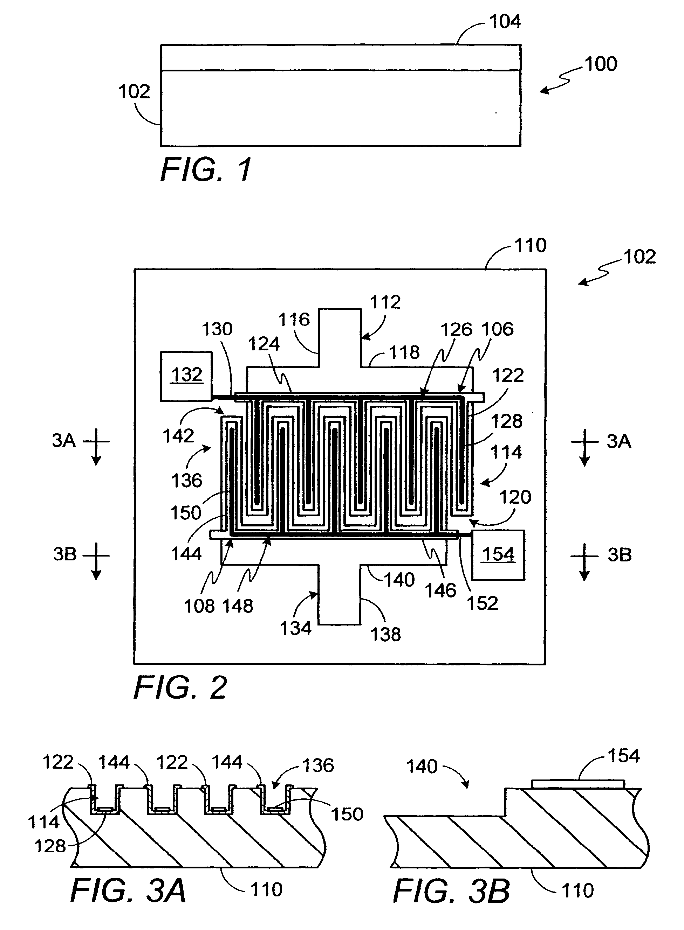

As illustrated for example in Figure 1, a fuel cell assembly 100 in accordance with one embodiment of the present invention includes a fuel cell 102 (a SOFC in the exemplary embodiment) and a reactant distribution structure 104 that is formed on, and carried by, the fuel cell. The reactant distribution structure 104 defines paths for the fuel (e.g. H₂ or hydrocarbon fuels such as CH₄, C₂H₆, C₃H₈, etc.) and oxidant (e.g. O₂ or ambient air) that are supplied to the fuel cell 102. Although the present inventions are not limited to any particular fuel cell configuration, in the exemplary fuel cell 102 illustrated in Figures 2-3B, an anode 106 and a cathode 108 are supported on an electrolytic substrate 110 and this arrangement is described briefly below. A more detailed description of the exemplary fuel cell 102 is provided in U.S. application Serial No. , entitled "Method for Making a Solid Oxide Fuel Cell," which is being filed concurrently herewith and is incorporated herein by reference.

As illustrated for example in Figures 2-3B, the electrolytic substrate 110 includes a fuel channel system 112 with a plurality of longitudinally extending channels 114 (note Figure 3A), an outlet channel 116 and a connector channel 118 that connects the longitudinally extending channels to the outlet channel. The longitudinally extending channels 114 define inlet regions 120 that receive fuel by way of the reactant distribution structure 104 in the manner described below. The anode 106 is primarily located within the fuel channel system 112. More specifically, the anode 106 includes a plurality of longitudinally extend portions 122 that coat the surface of the longitudinally extending channels 114 (note Figure 3A) and a connector portion 124 that is located within the connector channel 118. Relatively small lengths of the connector portion 124 extend beyond the longitudinal ends of the connector channel 118 in order to account for minor misalignments during manufacturing. A current collector 126, which includes a plurality of longitudinally extending portions 128 and a connector portion 130 that is connected to a contact 132, is supported on the anode 106.

The electrolytic substrate 110 also includes an oxidant channel system 134 with a plurality of longitudinally extending channels 136 (note Figure 3A), an outlet channel 138 and a connector channel 140 that connects the longitudinally extending channels to the outlet channel. The longitudinally extending channels 136 define inlet regions 142 that receive oxidant by way of the reactant distribution structure 104 in the manner described below. The cathode 108 is primarily located within the oxidant channel system 134. More specifically, the cathode 108 includes a plurality of longitudinally extending portions 144 that coat the surface of the longitudinally extending channels 136 (note Figure 3A) and a connector portion 146 that is located within the connector channel 140. Relatively small lengths of the connector portion 146 extend beyond the longitudinal ends of the connector channel 140 in order to account for minor misalignments during manufacturing. A current collector 148, which includes a plurality of longitudinally extending portions 150 and a connector portion 152 that is connected to a contact 154, is supported on the cathode 108.

As noted above, fuel is supplied to the inlet regions 120 of the fuel channel system 112 of the fuel cell 102, and oxidant is supplied to the inlet regions 142 of the oxidant channel system 134, by way of the reactant distribution structure 104. The oxidant is electrochemically ionized at the cathode 108, thereby producing ions that diffuse across the conducting electrolytic substrate 110 and react with the fuel at the anode 106 to produce byproducts (CO₂ and water vapor in the exemplary embodiment). Current collected by the current collectors 126 and 148 is connected to a load by way of the contacts 132 and 154. Byproducts and any unused reactants travel through the outlet channels 116 and 138 and are evacuated from the fuel cell assembly 100, also by way of the reactant distribution structure 104.

Although the materials, dimensions, and configuration of the exemplary fuel cell 102 and substrate 132 will depend upon the type of fuel cell (e.g. SOFC, PEM, etc.) and intended application, and although the present inventions are not limited to any particular materials, dimensions, configuration or type, the exemplary fuel cell 102 may be configured as follows. The anode 106 in the exemplary fuel cell 102 is preferably a porous, ceramic and metal composite (also referred to as "cermet") film that is about 0.5-10 µm thick. Another option for the anode is a mixture of conductive and non-conductive ceramics with a catalyst. Suitable ceramics include Samaria-doped ceria ("SDC") or Gadolinia-doped ceria ("GDC") and suitable metals include nickel and copper. The exemplary cathode 108 is preferably a porous ceramic film that is about 0.5-10 µm thick. Suitable ceramic materials include samarium strontium cobalt oxide ("SSCO"). The electrolytic substrate 110 is preferably a relatively thick layer of non-porous ceramic film, such as SDC, that is about 400-600 µm thick. Alternatively, a relatively thin electrolytic layer (e.g. about 10-40 µm thick) may be supported on a suitable substrate. Suitable current collector materials include stainless steel, silver, gold and platinum.

With respect to the fuel and oxidant channel systems 112 and 134 which are defined by the electrolytic substrate 110 in the exemplary implementation, the depth is about 1-100 µm. The longitudinally extending channels 114 and 136 are about 5-100 µm wide, the outlet channels 116 and 138 are about 5-100 µm wide and the connector channels 118 and 140 are about 5-100 µm wide.

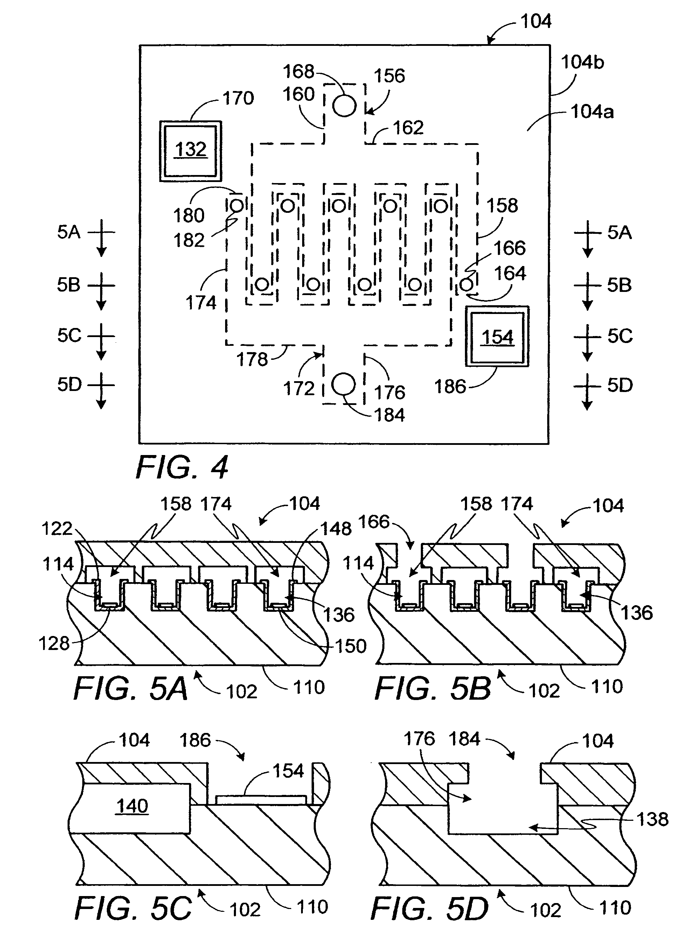

Turning to Figures 4-5D, the exemplary reactant distribution structure 104 is a one-piece, unitarily formed structure that is formed on, and carried by, the fuel cell 102. More specifically, the reactant distribution structure 104 in the illustrated embodiment is preferably formed on, and carried by, the electrolytic substrate 110. The reactant distribution structure 104, which defines a top exterior surface 104a and side exterior surfaces 104b, is provided with a channel structure that corresponds to the anode and cathode of the underlying fuel cell. In those instances where the anode and cathode are associated with a fuel channel system and an oxidant channel system, as they are in the exemplary embodiment, the channel system in the reactant distribution structure 104 will also correspond to the fuel and oxidant channel systems of the fuel cell.

On the anode side, the exemplary reactant distribution structure 104 illustrated in Figures 4-5D is provided with a fuel channel system 156 with a plurality of longitudinally extending channels 158, an outlet channel 160 and a connector channel 162 that connects the longitudinally extending channels to the outlet channel. The longitudinally extending channels 158 define inlet regions 164. A plurality of fuel inlet apertures 166 extend through the reactant distribution structure 104, i.e. from the outer surface of the reactant distribution structure to the inlet regions 164, while an outlet aperture 168 (or a plurality of outlet apertures) extends though the reactant distribution structure to the outlet channel 160. Finally, an anode-side current collector aperture 170 also extends through the reactant distribution structure 104 so that connection can be made to the current collector 132. The current collector aperture 170 may be omitted in those instances where the current collector 132 extends to the longitudinal edge of the fuel cell 102 and connection to the current collector is made from the side.

The cathode side of the exemplary reactant distribution structure 104 is provided with a similar arrangement. An oxidant channel system 172 includes a plurality of longitudinally extending channels 174, an outlet channel 176 and a connector channel 178 that connects the longitudinally extending channels to the outlet channel. The longitudinally extending channels 174 define inlet regions 180. A plurality of oxidant inlet apertures 182 extend through the reactant distribution structure 104, i.e. from the outer surface of the reactant distribution structure to the inlet regions 180, while an outlet aperture 184 (or a plurality of outlet apertures) extends though the reactant distribution structure to the outlet channel 176. Finally, a cathode-side current collector aperture 186 also extends through the reactant distribution structure 104 so that connection can be made to the current collector 154. Here too, the current collector aperture 186 may be omitted in those instances where the current collector 154 extends to the longitudinal edge of the fuel cell 102 and connection to the current collector is made from the side.

There are a variety of advantages associated with the present reactant distribution structure. For example, the present reactant distribution structure may be manufactured directly onto the associated fuel cell, which provides much better alignment accuracy than would be realized if the reactant distribution structure was separately manufactured and then secured to the fuel cell. The improved alignment reduces the likelihood of fuel and oxidant mixing, even though the anode and cathode are the same side of the fuel cell, thereby improving the efficiency of the fuel cell. The present reactant distribution structure also simplifies fuel cell packaging, because the reactants only have to be delivered to one side of the fuel cell.

The reactant distribution structure 104 is preferably formed from a material that is electrically non-conducting and capable of withstanding high temperatures. Suitable materials include Al₂O₃, ZnO, MgO₂, TiO₂ and other metal oxides. The dimensions of the reactant distribution structure 104 will depend primarily upon the dimensions/requirements of the associated fuel cell 102 as well as the manner in which the fuel cell assembly 100 will be packaged. In the exemplary embodiment, the longitudinally extending channels 158 and 174 are about 10-140 µm wide, the outlet channels 160 and 176 are about 10-140 µm wide and the connector channels 162 and 178 are about 10-140 µm wide. The depth of the channels is about 10-200 µm, while the overall thickness of the exemplary reactant distribution structure 104 is about 4-100 µm.

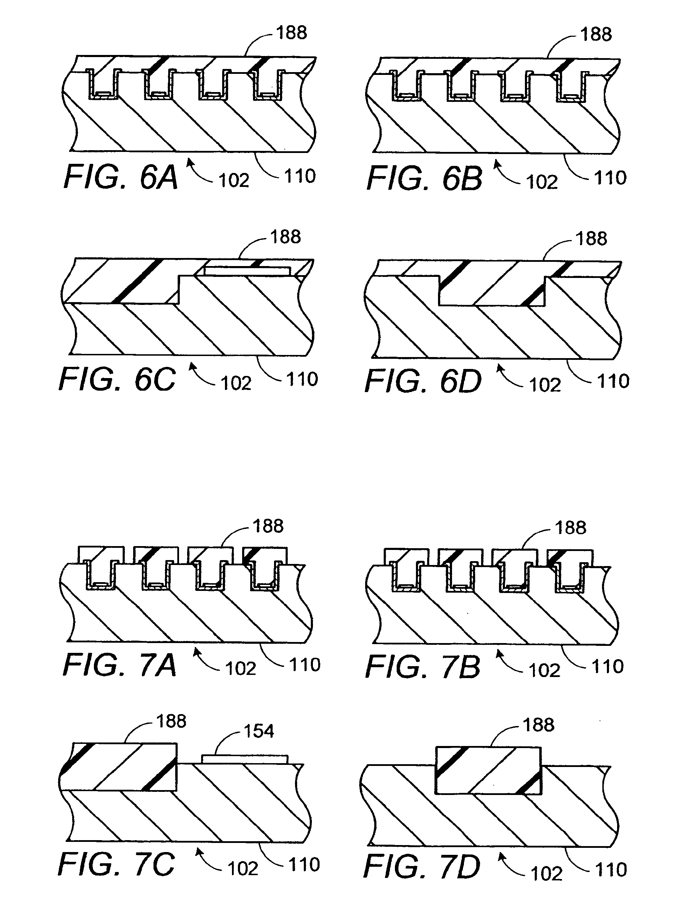

Turning to manufacture, the fuel cell reactant distribution structure 104 illustrated in Figures 4-5D may be manufactured with, for example, conventional semiconductor manufacturing equipment. Techniques implemented with this equipment include the exemplary single-sided process illustrated in Figures 6A-10D. [The section views shown in Figures 6A-10D correspond to those presented in Figures 5A-5D.] Referring first to Figures 6A-6D, the top surface of the fuel cell 102 (including the reactant channels) is covered with a layer of sacrificial material 188. The sacrificial material 188 will ultimately be removed, thereby re-opening the reactant channels on the fuel cell 102 and forming the reactant channels in the reactant distribution structure 104. Suitable sacrificial materials include aluminum (deposited via chemical or physical vapor deposition), photoresist (deposited via "spin on" technique) and other materials with suitable etch selectivity to the fuel cell and reactant distribution structure materials. The layer of sacrificial material 188 may then be planarized to produce a smooth surface, as shown, although this is not necessary.

Next, as illustrated for example in Figures 7A-7D, the layer of sacrificial material 188 is patterned in order to remove portions of the layer. The sacrificial material that remains is located in areas that will ultimately be voids in the fuel cell 102 and reactant distribution structure 104, i.e. the reactant channels and current collector apertures. Suitable processes for patterning the sacrificial material 188 include chemical etching (aluminum sacrificial material) and photolithography (photoresist sacrificial material).

Alternatively, instead of the deposition and patterning techniques described above, a pre-patterned layer of sacrificial material may be formed without a removal step through the use of screen printing and or other printing techniques. Typically, this technique would be employed for structures greater than 50 µm in width.

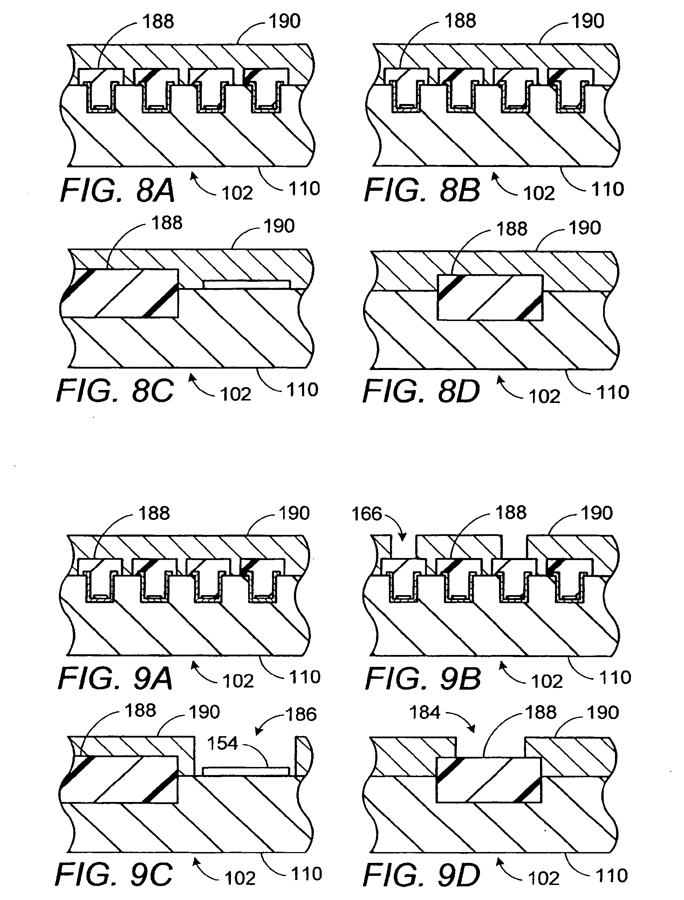

The next step in the exemplary process is illustrated in Figures 8A-8D. Here, a layer of reactant distribution structure material 190 (i.e. the material that will ultimately form the reactant distribution structure 104) is deposited over the fuel cell 102 and the now-patterned layer of sacrificial material 188. Suitable techniques for depositing the reactant distribution structure material 190 include physical vapor deposition ("PVD"), chemical vapor deposition ("CVD") and plasma enhanced chemical vapor deposition ("PECVD"). The reactant distribution structure material 190 will bond with the exposed portions of the electrolytic substrate 110, thereby securing the reactant distribution structure material to the fuel cell 102.

Turning to Figures 9A-9D, the layer of reactant distribution structure material 190 is then patterned in order to remove portions of the layer. Such patterning will form the fuel inlet apertures 166, outlet aperture 168, anode-side current collector aperture 170, oxidant inlet apertures 182, outlet aperture 184 and cathode-side current collector aperture 186. Suitable techniques for removing portions of the reactant distribution structure material 190 include chemical etching, reactive ion etching ("RIE"), sputter etching and ion milling.

Alternatively, instead of the deposition and patterning techniques described above, a pre-patterned layer of reactant distribution structure material 190 may be formed without a removal step through the use of screen printing and or other printing techniques.

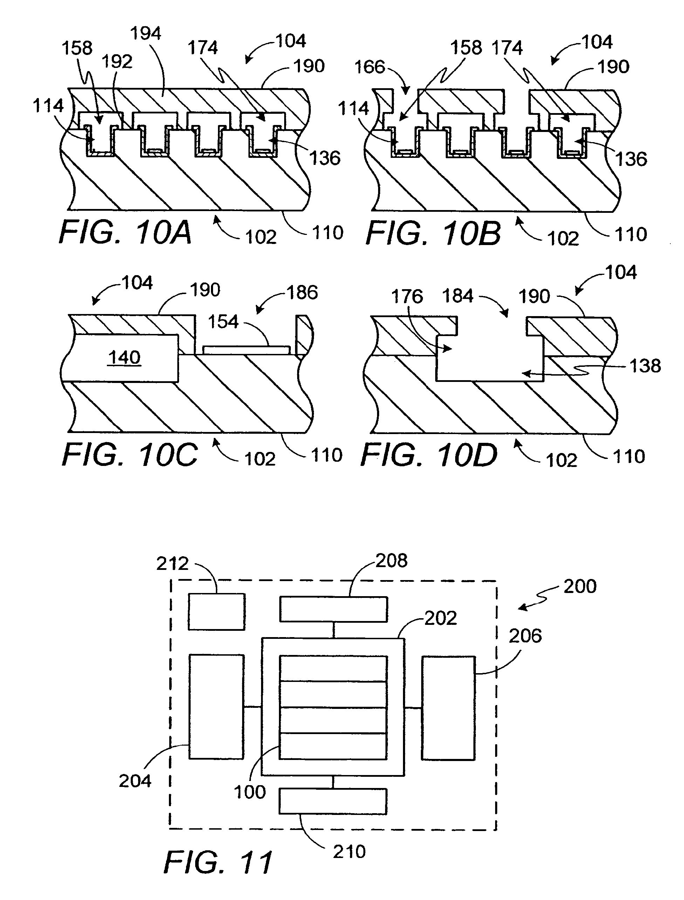

The final step in the exemplary reactant distribution structure 104 formation process is the removal of the sacrificial material 188. [Figures 10A-10D.] Such removal reopens the fuel and oxidant channel systems 112 and 134 in the fuel cell 102 and creates the fuel and oxidant channel systems 156 and 172 in the reactant distribution structure material 190. Suitable techniques for removing the sacrificial material 188 include chemical etching (aluminum sacrificial material) and oxygen ashing (photoresist sacrificial material). In either case, the sacrificial material 188 will be removed by way of the reactant apertures that were formed in the reactant distribution structure material 190 in the previous step, i.e. the fuel and oxidant inlet apertures 166 and 182 and the outlet apertures 168 and 184.

As illustrated in Figure 10A, the completed exemplary reactant distribution structure 104 includes a plurality of support walls 192 that extend from a top wall 194 to the electrolytic substrate 110. The support walls 192 define the reactant channels and current collector apertures and support the reactant distribution structure 104 on the fuel cell 104.

The exemplary fuel cell assembly 100 may be packaged and used in a variety of ways. Fuel cell assemblies may be packaged and used individually. Alternatively, as illustrated for example in Figure 11, a plurality of fuel cell assemblies 100 may be incorporated into a fuel cell system 200 that includes a stack 202. A fuel supply 204 supplies fuel to the inlet apertures 166 of each fuel cell assembly 100 by way of an inlet manifold (not shown) and an oxidant supply 206 supplies oxidant to the inlet apertures 182 cathode of each fuel cell assembly by way of an inlet manifold (not shown). In those instances where ambient air is used, the oxidant supply may simply be a vent or a vent and fan arrangement. The byproducts are vented out of the stack by way of outlet manifolds (not shown) and byproduct outlets 208 and 210. A controller 212 may be provided to monitor and control the operations of the exemplary fuel cell system 200. Alternatively, the operation of the fuel cell system may be controlled by the host (i.e. power consuming) device. It should be noted that implementations of the exemplary fuel cell system 200 include systems in which the fuel supply 204 is replenishable or replaceable as well as systems in which all of the fuel that will be consumed by the system is initially present in the system.

Although the present inventions have been described in terms of the preferred embodiments above, numerous modifications and/or additions to the above-described preferred embodiments would be readily apparent to one skilled in the art. By way of example, but not limitation, while reactant channels in the exemplary embodiment are generally linear, they may also be a tortuous. Additionally, although the exemplary fuel cell is configured such that it has its own reactant channels, the present reactant distribution structure may also be used in combination with fuel cell that are configured such that the anode and cathode simply lie flat on an electrolytic substrate. It is intended that the scope of the present inventions extend to all such modifications and/or additions.

## Claims

1. A method of making a fuel cell assembly, comprising the steps of:
providing a fuel cell (102) including a surface that supports at least one electrode (106, 108); and
forming reactant distribution structure (104) on the surface of the fuel cell.

2. A method as claimed in claim 1,
wherein the step of providing a fuel cell (102) comprises providing a fuel cell including a surface that supports an anode (106) and a cathode (108); and
wherein the step of forming a reactant distribution structure (104) comprises forming a reactant distribution structure having a fuel channel (158) associated with the anode and a oxidant channel (174) associated with the cathode and isolated from the fuel channel.

3. A method as claimed in claim 1, wherein the step of forming a reactant distribution structure (104) comprises the steps of:
creating a layer of sacrificial material (188) on the surface of the fuel cell (102) such that portions of the surface are covered by the sacrificial material and portions of the surface are uncovered;
depositing a layer of reactant distribution structure material (190) over the sacrificial material and the uncovered portions of the surface of the fuel cell; and
removing the sacrificial material.

4. A method as claimed in claim 3, wherein the step of creating a layer of sacrificial material (188) comprises the step of:
depositing a layer of sacrificial material on the surface of the fuel cell (102); and
removing portions of the layer of sacrificial material from the surface of the fuel cell.

5. A method as claimed in claim 3, further comprising the step of:
removing portions of the layer of reactant distribution structure material (188) to form reactant apertures (166, 168, 182, 184).

6. A method as claimed in claim 5, wherein the step of removing the sacrificial material (188) comprises removing the sacrificial material through the reactant apertures (166, 168, 182, 184).

7. A fuel cell assembly, comprising:
a fuel cell (102) defining a surface and including an anode (106) on the surface and a cathode (108) on the surface in spaced relation to the anode; and
a reactant distribution structure (104) carried on the surface of the fuel cell including a plurality of interior surfaces that define a fuel channel (158) associated with the anode and an oxidant channel (174) associated with cathode and isolated from the fuel channel, an exterior surface (104a, 104b), fuel channel inlet and outlet apertures (166, 168) extending through the exterior surface to the fuel channel, and oxidant channel inlet and outlet apertures (182, 184) extending through the exterior surface to the oxidant channel.

8. A fuel cell assembly as claimed in claim 7, wherein the fuel cell includes an electrolytic layer (110) defining an electrolytic surface and the anode (106) and cathode (108) are on the electrolytic surface.

9. A fuel cell assembly as claimed in claim 8, wherein the reactant distribution structure (104) is carried by, and secured to, the electrolytic surface.

10. A fuel cell assembly as claimed in claim 7, wherein the reactant distribution structure exterior surface includes a top exterior surface (104a) and a plurality of side exterior surfaces (104b), the fuel channel inlet and outlet apertures (166, 168) extend through the top exterior surface and the oxidant channel inlet and outlet apertures (182, 184) extend through the top exterior surface.

11. A fuel cell assembly as claimed in claim 7, wherein fuel cell surface includes a fuel channel (114) associated with the anode (106) and an oxidant channel (136) associated with the cathode (108).
